(19) Europäisches Patentamt / European Patent Office / Office européen des brevets

(11) **EP 3 599 714 A1**

(12) **EUROPEAN PATENT APPLICATION**

(43) Date of publication:
29.01.2020 Bulletin 2020/05

(51) Int Cl.:
*H02P 6/16* (2016.01)  *H02K 29/08* (2006.01)

(21) Application number: 19181377.3

(22) Date of filing: 19.06.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 24.07.2018 DE 102018212314

(71) Applicant: **BSH Hausgeräte GmbH**
**81739 München (DE)**

(72) Inventors:
• **Szilagyi, Peter**
**07701 Kralovsky Chlmec (SK)**
• **Ostroznicky, Jozef**
**07233 Fekisove (SK)**
• **Laskody, Tomas**
**07214 Pavlovce nad (SK)**

(54) **METHOD FOR DETERMINING THE ROTOR POSITION OF A BLDC MOTOR**

(57) A method (400) for determining a rotor position (220) of a rotor of a brushless DC motor (100) is described. The motor (100) comprises a rotor with magnets (102) forming K magnetic pole pairs and a stator with M poles (103) configured to generate a magnetic field. The method (400) comprises measuring (401) a first sensor signal (211) indicative of a magnetic flux density of the magnetic field as a function of time, using a first sensor (201) placed at a first fixed position within the motor (100). Furthermore, the method (400) comprises measuring (402) a second sensor signal (212) indicative of the magnetic flux density as a function of time, using a second sensor (202) placed at a second fixed position within the motor (100). The first position and the second position are spaced from one another by an angular distance (204), wherein the angular distance (204) is unequal to n*180°/K, with n being an integer equal to or greater than 0. In addition, the method (400) comprises determining (403) a rotor position signal indicative of the rotor position (220) as a function of time, based on the first sensor signal (211) and based on the second sensor signal (212).

Fig. 2a

**Description**

The present document is directed at brushless DC (BLDC) motors. In particular, the present document is directed at determining the position of the rotor of a BLDC motor.

BLDC motors are used in various different applications, notably due to their relatively high power to weight ratio. In order to allow for a precise control of the torque and/or the speed of a BLDC motor, the position of the rotor of the BLDC motor needs to be determined in a precise manner.

The present document is directed at the technical problem of determining the position of the rotor of a BLDC motor in an efficient and precise manner. This technical problem is solved by the subject-matter of the independent claim. Preferred examples are described in the dependent claims, in the following description and in the attached drawing.

According to an aspect, a method for determining a rotor position of a rotor of a brushless DC motor is described. The motor comprises a rotor with magnets forming K magnetic pole pairs and a stator with M poles, wherein the stator is configured to generate a (rotating) magnetic field. The method comprises measuring a first (continuous) sensor signal which is indicative of a magnetic flux density of the magnetic field as a function of time, using a first sensor placed at a first fixed position within the motor (e.g. on a shield of the motor, near the rotor). Furthermore, the method comprises measuring a second (continuous) sensor signal which is indicative of the magnetic flux density as a function of time, using a second sensor placed at a second fixed position within the motor (e.g. on the shield of the motor, near the rotor). The first position and the second position are spaced from one another by an angular distance (around the rotational axis of the motor), wherein the angular distance is unequal to $n*180°/K$, with $n$ being an integer equal to or greater than 0 (notably between 0 and 2K). In particular, the angular distance may be $90°/K + n*180°/K$. In addition, the method comprises determining a rotor position signal which is indicative of the rotor position as a function of time, based on the first sensor signal and based on the second sensor signal.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawing, wherein

Figs. 1a and 1b show a cross section of an example BLDC motor;
Fig. 1c shows an example control unit for controlling a BLDC motor;
Fig. 2a illustrates example Hall sensors on the rotor of a BLDC motor;
Fig. 2b illustrates example sensor signals provided by the Hall sensors of a BLDC motor;
Fig. 2c shows an example position signal of the synchronous position of a BLDC motor;
Figs. 3 shows an example control scheme for operating a BLDC motor based on the measured synchronous position;
Fig. 4 shows a flow chart of an example method for determining the synchronous position of the rotor of a BLDC motor; and
Fig. 5 shows a flow chart of an example method for controlling a BLDC motor.

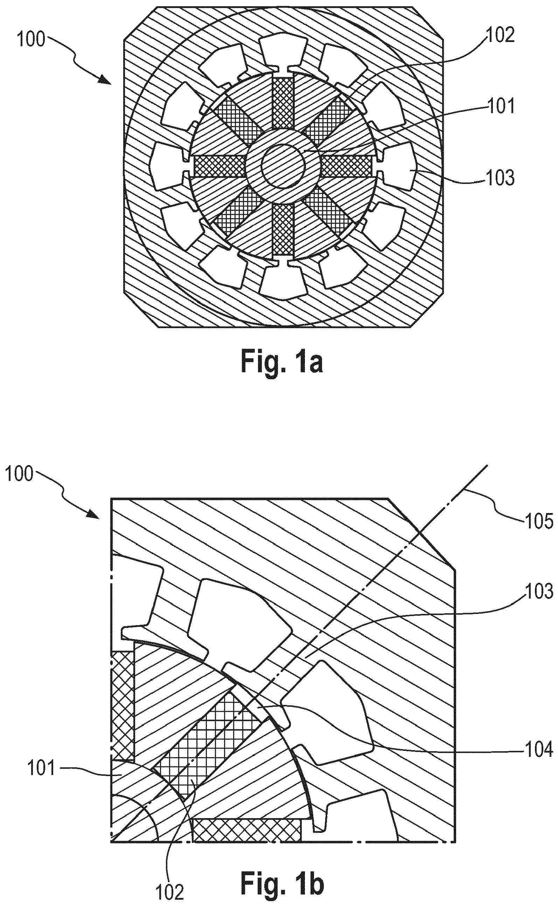

As indicated above, the present document is directed at determining the synchronous position of the rotor of a BLDC motor. In this context, Fig. 1a shows a cross section of an example BLDC motor 100 with a rotating shaft 101 and a rotor being attached to the rotating shaft 101. The rotor comprises a number N of permanent magnets 102. In the illustrated example N=8. The permanent magnets 102 of the rotor may be arranged to exhibit a north pole and a south pole towards the stator of the motor 100 in an alternating manner. Hence, the rotor may comprise K=N/2 pole pairs. The motor 100 of Fig. 1a comprises a stator with M=12 stator teeth or stator poles 103. The stator poles 103 each comprise a coil which is configured to generate a magnetic field at the respective stator pole 103. A rotating magnetic field may be generated by applying different phases of a stator current through the coils of the stator poles 103.

Fig. 1b shows an excerpt of Fig. 1a. In particular, Fig. 1b shows a magnet 102 of the rotor which is aligned along the stability axis 105 with a pole 103 of the stator. Typically, there is an air gap 104 located between the rotor magnet 102 and the stator pole 103.

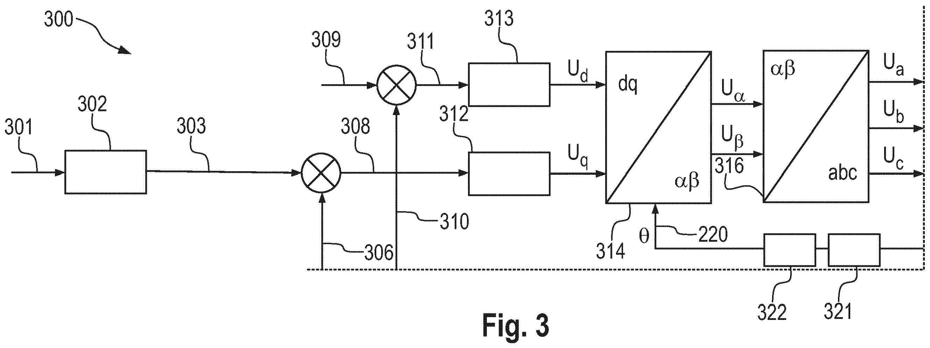

Fig. 3 shows an example control scheme 300 which may be used for controlling a BLDC motor 100. The control scheme 300 may be implemented using analogue and/or digital hardware (e.g. using a microprocessor). For digital processing, the sensor signals of one or more sensors may be converted from the analog domain to the digital domain using one or more ADCs (analog to digital converters). The control scheme 300 shown in Fig. 3 may then be implemented on a microprocessor to determine control voltages for controlling the current through the coils of the stator poles 103 of the motor 100. The actual currents may be generated using an inverter (not shown in Fig. 3).

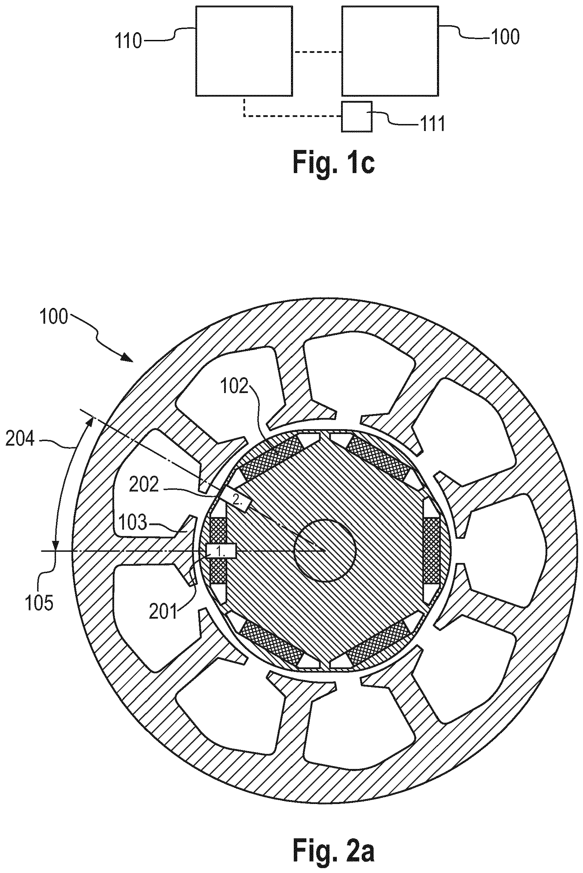

Fig. 1c shows an example control unit 110 which is configured to control a BLDC motor 100. The control unit 110 may be configured to determine sensor signals from one or more sensor 111 of the motor 100. The sensor signals may indicate the rotational speed of the shaft 101 of the motor 100. Alternatively or in addition, the sensor signals may indicate the position of the rotor of the motor 100 relative to the stator. The control unit 110 may be configured to implement the control scheme 300 described in the present document. Furthermore, the control unit 110 may be configured to implement the method for determining the position of the rotor, which is described in the present document.

The control scheme 300 of Fig. 3 is directed at controlling the rotational speed ω of the motor 100. The actual speed of the motor 100 is sensed using one or more sensors 111 and compared with a target speed, thereby providing a speed error signal or a speed deviation 301. Alternatively or in addition, the rotational speed may be determined by derivation of a rotor position signal which indicates the rotor position 220 as a function of time.

Using a speed regulator 302, notably a PI (proportional, integrating) regulator, a target current 303 (in the q-axis of the DQ reference frame) may be determined, based on the speed deviation 301. Typically, the target current 303 corresponds to the output of the speed regulator 302.

The target (stator) current 303 is compared with a measured (stator) current 306 (in the q-axis of the stationary DQ reference frame), thereby providing a current error signal or current deviation 308 (in the q-axis). In a similar manner, the target current 309 (in the d-axis) is compared with the measured current 310 (in the d-axis) to provide a current error signal or current deviation 311 (in the d-axis). Typically, the target current 309 (in the d-axis) is zero if one or more permanent magnets 102 are used for the rotor. Using regulators 313, 312, the respective current error signals 311, 312 are transformed into control voltages $U_d$ (in the d-axis) and $U_q$ (for the q-axis), respectively. Using a Park transformation unit 314 (which takes into account the instantaneous or synchronous position 220 of the rotor) and a subsequent Clarke transformation unit 316 or using a combined Direct-quadrature-zero transformation, the control voltages $U_a$, $U_b$, $U_c$ (in the ABC reference frame) for the three phases of the stator of the motor 100 may be determined. The control voltages $U_a$, $U_b$, $U_c$ (i.e. the different phases of a multiphase control voltage) indicate the amplitudes of the AC voltages for the three phases. Using an inverter (not shown), the AC voltages for the three phases may be generated, thereby operating the motor 100 at a certain target speed. The AC voltages have a frequency corresponding to the target speed.

In order to enable a precise control of a motor 100, the position 220 of the rotor needs to be measured in a precise manner. The position 220 of the rotor of a motor 100 may be determined using sensors 111, 201, 202, notably Hall sensors, which are mounted at fixed positions within the motor 100 (e.g. at different positions on the stator of the motor 100). The sensors 111, 201, 202 are configured to measure the magnetic flux density of the rotor of the motor 100 against the stator of the motor 100. Fig. 2a shows an excerpt of a motor 100 which comprises a stator with M=9 poles 103 and a rotor with N=6 magnets 102. Hence, the motor 100 comprises a rotor with K=N/2=3 pole pairs, such that a full rotation of the shaft 101 of the motor 100 requires three rotations of the magnetic field which is generated by the poles 103 of the stator, i.e. three cycles of the stator current 308, 309.

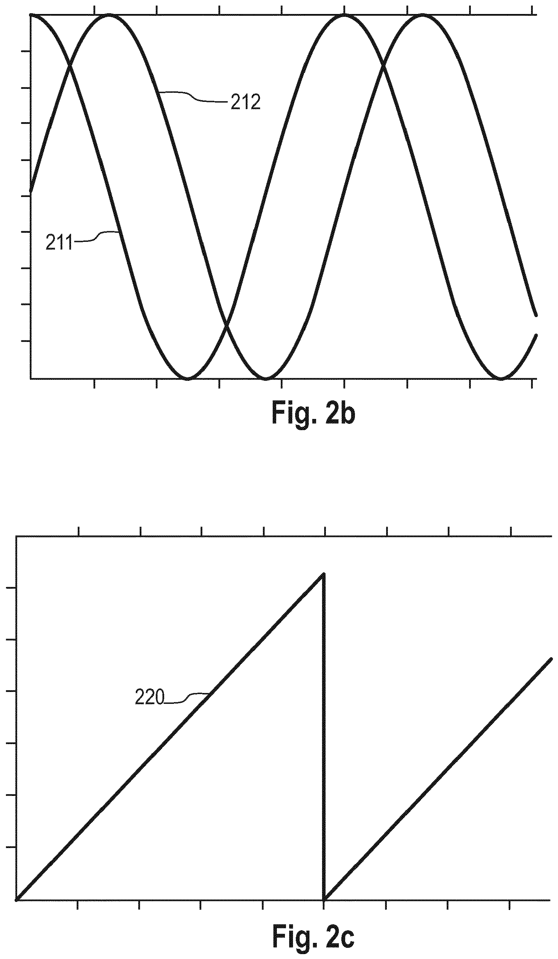

The motor 100 may comprise exactly two sensors 201, 202 which are placed at two different positions on the stator or on the shield of the motor 100. The sensors 201, 202 may each be configured to sense the magnetic field which is generated by the (rotating) rotor of the motor 100. In particular, the magnitude of the magnetic field or the magnetic flux density may be measured. Furthermore, the sensors 201, 202 may be configured to provide sensor data in a continuous manner. Hence, a temporal evolution or curve or signal of the magnetic flux density may be provided. Fig. 2b shows example sensor signals 211, 212 which are provided by the sensors 201, 202, respectively, during operation of a motor 100. It can be seen that the magnetic flux density oscillates in a sinusoidal manner as the rotor moves past the sensors 201, 202. In particular, it can be seen that the measured magnetic flux density of a sensor 201, 202 is maximum or minimum, when a magnet 102 of the rotor is closest to the sensor 201, 202. On the other hand, the measured magnetic flux density is at an intermediate value (e.g. 0), when the sensor 201, 202 is positioned between two magnets 102 of opposed polarity.

As illustrated in Fig. 2a, the sensors 201, 202 may be placed at fixed positions within the motor 100, wherein the positions are preferably such that the minimum distance between a magnet 102 and a sensor 201, 202 is as small as possible (without the risk of the magnet 102 touching the sensor 201, 202). In particular, the sensors 201, 202 may be placed above or below the trajectory of the magnets 102 (with respects to the rotational axis of the shaft 101 of the motor 100).

The sensor signals 211, 212 may be viewed as (continuous) observations of the magnetic field which is generated by the magnets 102 of the rotor. The observations of the two sensors 201, 202 may be identical but phase shifted with a phase shift that depends on the positions of the two sensors 201, 202. As shown in Fig. 2a, the two sensors 201, 202 are positioned at different angles around the shaft 101 of the motor 100, wherein the different angles exhibit a certain angular distance 204 from one another. The angular distance 204 should be such that the phase shift between the sensor signals 211, 212 is unequal to 180° or 360° (e.g. unequal from 180° or 360° by 10% or more). In a preferred example, the angular distance 204 is such that the phase shift between the sensor signals 211, 212 is equal to 90° or 270°. In case of a rotor with K=N/2 pole pairs, the angular distance 204 should therefore be unequal to 360°/N*n, with n being an integer equal or greater than 0. On the other hand, the angular distance 204 should preferably be equal to 180°/N + 360°/N*n. In the illustrated example of Fig. 2a, the angular distance 204 is 30°.

Notably if the angular distance 204 is selected to be 180°/N + 360°/N*n, then the synchronous position θ 220 of the rotor may be determined using the trigonometric formula

$$\theta = \arctan\left(\frac{U_1}{U_2}\right),$$

wherein $U_1$ is the first sensor signal 211 of the first sensor 201 and wherein $U_2$ is the second sensor signal 212 of the second sensor 202. Fig. 2c shows an example temporal evolution or signal of the synchronous position 220, which is determined based on the sensor signals 211, 212.

Furthermore, the first sensor 201 is preferably aligned with the axis 105 of a pole 103 of the stator. The different poles 103 of the stator are typically assigned to one of the phases of a multiphase control voltage. As outlined in the context of Fig. 3, the different phases of the multiphase control voltage may be referred to as $U_a$, $U_b$, $U_c$. The M poles 103 of the stator may be grouped into subgroups of three adjacent stator poles 103, thereby providing M/3 subgroups. The first phase $U_a$ of the multiphase control voltage may be applied to the first pole 103 of each subgroup, the second phase $U_b$ of the multiphase control voltage may be applied to the directly adjacent second pole 103 of each subgroup, and the third phase $U_c$ of the multiphase control voltage may be applied to the directly adjacent third pole 103 of each subgroup. The first sensor 201 is preferably aligned with the axis 105 of the first pole 103 of one of the subgroups of poles 103 of the stator. By doing this, the rotor position 220 may be determined in a particularly efficient manner (using the above mentioned trigonometric formula).

Within the control scheme 300 of Fig. 3, the sensor signals 211, 212 (notably the analog voltages) provided by the sensors 201, 202 may be converted into digital signals using ADCs (analog-to-digital converters) 321. The synchronous position 220 may then be calculated e.g. using the above mentioned formula within a digital processing unit 322.

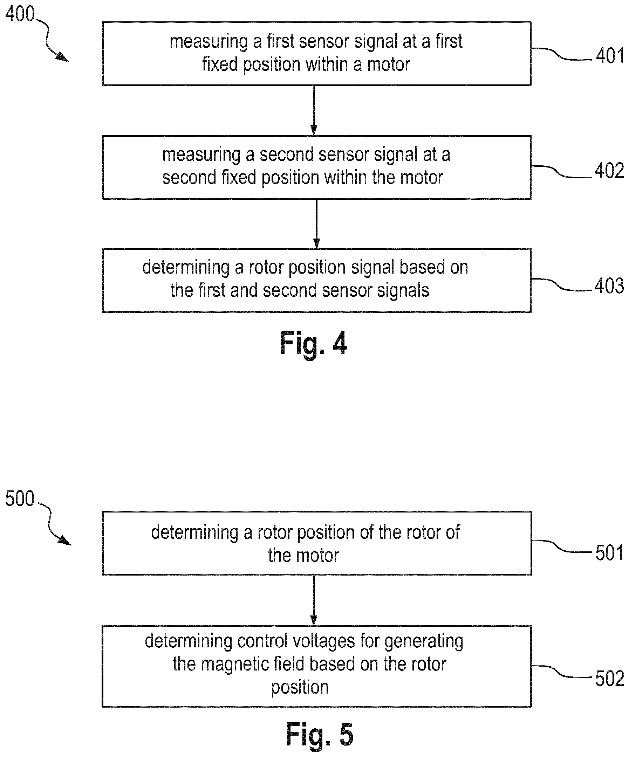

Fig. 4 shows a flow chart of an example method 400 for determining a rotor position 220 of a rotor of a brushless DC motor 100. The motor 100 comprises a rotor with magnets 102 forming K magnetic pole pairs and a stator with M poles 103, wherein the stator is configured to generate a (rotating) magnetic field. The rotor may comprise N magnets 102 forming the K magnetic pole pairs, notably with K=N/2. K may be an integer, notably an integer greater than one. M may be an integer, e.g. M=3, 6, 9, 12, or more. The method 400 may be implemented using a control unit 110 for controlling the motor 100.

The method 400 comprises measuring 401 a first sensor signal 211 which is indicative of the magnetic flux density of the magnetic field (which is generated by the magnets 102 of the rotor) as a function of time. The first sensor signal 211 may be measured using a first sensor 201, notably a first Hall sensor, placed at a first (fixed) position within the motor 100. In particular, the first sensor 201 may be positioned such that the magnets 102 of the rotor pass directly below or above the first sensor 201 (with regards to an axis which runs in parallel to the shaft 101 of the motor 100). The first sensor signal 211 may comprise a sequence of samples for a corresponding sequence of time instants. The sequence of time instants may comprise 10, 20, 50, 100 or more time instants for each rotation of the rotor. Alternatively, the first sensor signal 211 may be a continuous signal (e.g. an analog signal). Hence, the first sensor signal 211 may indicate the temporal evolution of the magnetic flux density of the magnetic field (which is generated by the magnets 102 of the rotor) at the first position in a continuous manner.

Furthermore, the method 400 comprises measuring 402 a second sensor signal 212 which is indicative of the magnetic flux density as a function of time, using a second sensor 202, notably a second Hall sensor, placed at a second position within the motor 100. In particular, the second sensor 202 may be positioned such that the magnets 102 of the rotor pass directly below or above the second sensor 202 (with regards to an axis which runs in parallel to the shaft 101 of the motor 100). The second sensor signal 212 may comprise a sequence of samples for the corresponding sequence of time instants. Alternatively, the second sensor signal 212 may be a continuous signal (e.g. an analog signal). Hence, the second sensor signal 212 may indicate the temporal evolution of the magnetic flux density of the magnetic field (which is generated by the magnets 102 of the rotor) at the second position in a continuous manner.

The first position and the second position may be spaced from one another by an angular distance 204. The angular distance 204 may be unequal to n*180°/K, with n being an integer equal to or greater than 0 (notably between 0 and 2K). In particular, the angular distance 204 may deviate from n*180°/K by 10%, 20% or more. As a result of this, two observations of the magnetic field which is generated by the magnets 102 of the rotor within the motor 100 may be provided, which are at least partially independent from one another. By doing this, the rotor position 220 may be determined in a precise manner. Furthermore, the direction of rotation of the rotor may be determined.

In a preferred example, the angular distance 204 is substantially equal to 90°/K + n*180°/K, and/or the angular distance 204 deviates from 90°/K + n*180°/K by 10% or less. As a result of this, observations of the magnetic field which is generated by the magnets 102 of the rotor may be provided, which are substantially independent from one another and/or which correspond to coordinates (e.g. in a DQ reference frame) which are substantially perpendicular to one another.

In addition, the method 400 comprises determining 403 a rotor position signal which is indicative of the rotor position 220 as a function of time, based on the first sensor signal 211 and based on the second sensor signal 212. As indicated above, the first and second sensor signals 211, 212 may each comprise a sequence of samples for a corresponding sequence of time instants (notably subsequent to analog-to-digital conversion). In a similar manner, the rotor position signal may comprise a sequence of rotor positions 220 for the sequence of time instants. The rotor position 220 at a particular time instant may then be determined based on the samples of the first and second sensor signals 211, 212 for the particular time instant. In particular, the rotor position $\theta$ 220 at the particular time instant may be determined using

$$\theta = \arctan\left(\frac{U_1}{U_2}\right),$$

wherein $U_1$ is a sample of the first sensor signal 211 at the particular time instant, and wherein $U_2$ is a sample of the second sensor signal 212 at the particular time instant.

Hence, a method 400 is provided which enables a cost efficient and precise determination of the rotor position 220 of a motor 100.

The rotor position 220 which is determined using the method 400 may correspond to an "electrical" rotor position. Each mechanical rotation of the rotor may lead to K "electrical" or magnetic rotations. Hence, the mechanical rotor position (of the shaft 101) may be determined by dividing the (electrical or magnetic) rotor position 220 by K, i.e. by the number of magnetic pole pairs of the rotor.

As outlined above, the M poles 103 may be assigned to different phases $U_a$, $U_b$, $U_c$ of a multiphase control voltage for generating a rotating magnetic field. In a preferred example, the first position lies on an axis 105 through one of the M poles 103. The axis 105 may run perpendicular to the rotational axis of the shaft 101 of the motor 100 from the shaft 101 of the motor 100 through the pole 103. In particular, the first position lies on an axis 105 through a pole 103 which is assigned to a first phase $U_a$ of the multiphase control voltage. By selecting the first position in this manner, the rotor position 220 may be determined in a particularly efficient and precise manner.

The rotor rotates around the rotational axis of the motor 100. The first position and/or the second position are preferably such that a magnet 102 of the rotor is aligned with the first sensor 201 and/or the second sensor 202 along an axis running in parallel to the rotational axis, when the magnet 102 passes by the first sensor 201 and/or the second sensor 202. Hence, the first sensor 201 and/or the second sensor 202 may be placed relatively close to the magnets 102 of the rotor. As a result of this, the rotor position 220 may be determined in a particularly precise manner.

Fig. 5 shows a flow chart of an example method 500 for controlling a brushless DC motor 100. The motor 100 comprises a rotor with N magnets 102 (notably permanent magnets) and a stator with M stator poles 103. The N magnets 102 are fixed on a shaft 101. The magnets 102 may exhibit a magnetic orientation which alternates between adjacent magnets 102. In an example N=4, 6, 8 or more. Hence, pairs of two directly adjacent magnets 102 may form a pole pair. The M stator poles 103 typically each comprise a coil for generating a magnetic flux. The coils of the stator poles 103 may be used to generate a rotating magnetic field. For this purpose, groups of adjacent stator poles 103 may be submitted to different phases of a multi-phase stator current (notably a three-phase stator current). In an example M=6, 9, 12 or more.

The method 500 comprises, at a time instant t, determining 501 a rotor position 220 (also referred to herein as the synchronous or instantaneous position) of the rotor relative to the stator. The rotor position 220 may be determined using one, two or more sensors 111, 201, 202, notably two or more (or preferably exactly two) Hall sensors. In particular, the rotor position 220 may be determined using the method 400 described in the present document. Typically, the rotor position 220 may vary within a certain range, e.g. between 0 and $2\pi$ or 360°. It should be noted that the rotor position 220 may be determined using the sensor signal 211 of a single sensor 201. However, the precision of the determined rotor position 220 may be increased, when using (exactly) two sensors 201, 202 (as outlined in the present document). Furthermore, information regarding the direction of rotation of the rotor may be provided.

Furthermore, the method 500 comprises determining 502 control voltages Ua, Ub, Uc (i.e. the different phases of a multiphase control voltage) for driving the M poles 103 of the stator of the motor 100 to generate the (rotating) magnetic field, based on the rotor position 220. In view of the fact, that a precise estimate of the rotor position 220 is used for setting the control voltages Ua, Ub, Uc, a precise control of a motor 100, notably of the rotational speed $\omega$ of a motor 100, may be provided. The method 500 is typically repeated for a sequence of time instants, in order to provide for a continuous control of the motor 100.

The method 500 may be used to control the rotational speed of the shaft 101. For this purpose, a speed deviation 301 of a measured speed of the rotational speed from a target speed for the rotational speed may be determined. The measured speed may be determined by derivation of the rotor position signal with respect to time. The speed deviation 301 may then be used to adjust a target value for the stator current. The target value may be set and controlled within a stationary reference frame, thereby enabling a stable and efficient regulation of the stator current (and by consequence of the rotational speed). Hence, the method 500 may comprise determining a target current 303 for the stator current on a q-axis of a stationary reference frame, based on the speed deviation 301 and using a regulator 302 (notably a PI regulator).

The method 500 may further comprise determining a current deviation 308 of a measured current 306 on the q-axis from the target current 303 on the q-axis. The measured current 306 may be determined using a current sensor 111. Furthermore, a target voltage $U_q$ on the q-axis for controlling the motor 100 may be determined based on the current deviation 308 on the q-axis, using a regulator 312 (notably using a PI regulator). The target voltage $U_q$ on the q-axis may be used as a control signal for controlling the stator current. For this purpose, the target voltage $U_q$ on the q-axis may be transformed from the stationary reference frame to a rotating reference frame (notably to an ABC reference frame) using a (Park) transformation, thereby providing the control voltages $U_a$, $U_b$, $U_c$ (notably the amplitudes of the control voltages $U_a$, $U_b$, $U_c$) to be applied to the different coils for the different stator poles 103 for generating the rotating magnetic flux.

The method 500 may also comprise determining a current deviation 311 of a measured current 310 on a d-axis of the stationary reference frame from a target current 309 on the d-axis. The measured current 310 may be determined using a current sensor 111. The target current 309 on the d-axis may be zero when using permanent rotor magnets 102. Furthermore, the method 500 may comprise determining a target voltage $U_d$ on the d-axis for controlling the motor 100, based on the current deviation 311 on the q-axis and using a regulator 313 (notably a PI regulator).

Hence, target voltages $U_q$, $U_d$ may be provided within a stationary reference frame. These voltages may be transformed into a rotating reference frame (e.g. an $\alpha$, $\beta$ reference frame) in dependence of the (measured, actual) rotor position 220. For this purpose the Park transformation may be used.

The method 500 may further comprise transforming the target voltages $U_q$, $U_d$ from the stationary reference frame to an ABC reference frame for controlling multiple (notably three) phases of the stator, using a Park transformation matrix. The Park transformation matrix may be dependent on the (possibly adjusted) rotor position 220.

Using the above mentioned control scheme, a robust and efficient speed control of a motor 100 may be provided.

Furthermore, a control unit 110 for controlling a brushless DC motor 100 is described. The motor 100 comprises a rotor with N magnets 102 and a stator with M stator poles 103. The control unit 110 is configured to determine a rotor position 220 of the rotor relative to the stator (e.g. using the method 400 described in the present document). Furthermore, the control unit 110 is configured to determine control voltages $U_a$, $U_b$, $U_c$ for driving the M poles 103 of the stator of the motor 100 to generate the magnetic field of the stator, based on the rotor position 220.

The aspects outlined in the present document, enable a cost efficient and precise determination of the rotor position 220 of a BLDC motor 100. The method 400 outlined in the present document makes use of only two linear and/or continuous Hall sensors 201, 202 for providing an accurate value of the rotor position 220. As a result of this, the total harmonic distortion (THD) of the current of the different phases may be reduced. Furthermore, torque ripple of a motor 100 may be reduced. Furthermore, this allows controlling a motor 100 within a relatively wide range of rotational speeds from relatively low speeds to relatively high speeds (which is typically not possible when using sensorless control). Furthermore, the efficiency of the motor 100 may be increased and the acoustic noise of the motor 100 may be reduced.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A method (400) for determining a rotor position (220) of a rotor of a brushless DC motor (100); wherein the motor (100) comprises a rotor with magnets (102) forming K magnetic pole pairs and a stator with M poles (103) configured to generate a magnetic field; wherein the method (400) comprises,

   - measuring (401) a first sensor signal (211) indicative of a magnetic flux density of the magnetic field as a function of time, using a first sensor (201) placed at a first fixed position within the motor (100);
   - measuring (402) a second sensor signal (212) indicative of the magnetic flux density as a function of time, using a second sensor (202) placed at a second fixed position within the motor (100); wherein the first position and the second position are spaced from one another by an angular distance (204); wherein the angular distance (204) is unequal to n*180°/K, with n being an integer equal to or greater than 0; and
   - determining (403) a rotor position signal indicative of the rotor position (220) as a function of time, based on the first sensor signal (211) and based on the second sensor signal (212).

2. The method (400) of claim 1, wherein

- the angular distance (204) is substantially equal to 90°/K + n*180°/K; and/or
- the angular distance (204) deviates from 90°/K + n*180°/K by 10% or less.

3. The method (400) of any previous claims, wherein the first and second sensors (201, 202) each comprise a Hall sensor.

4. The method (400) of any previous claims, wherein

- the first and second sensor signals (211, 212) each comprise a sequence of samples for a corresponding sequence of time instants;
- the rotor position signal comprises a sequence of rotor positions (220) for the sequence of time instants; and
- the rotor position (220) at a particular time instant is determined based on the samples of the first and second sensor signals (211, 212) for the particular time instant.

5. The method (400) of claim 4, wherein the sequence of time instants comprises 10, 20, 50, 100 or more time instants for each rotation of the rotor.

6. The method (400) of any previous claims, wherein

- $U_1$ is a sample of the first sensor signal (211) at a particular time instant;
- $U_2$ is a sample of the second sensor signal (212) at the particular time instant; and
- the rotor position $\theta$ (220) at the particular time instant is determined using

$$\theta = \arctan\left(\frac{U_1}{U_2}\right).$$

7. The method (400) of any previous claims, wherein K is an integer greater than one.

8. The method (400) of any previous claims, wherein

- the M poles (103) are assigned to different phases of a multiphase control voltage ($U_a$, $U_b$, $U_c$) for generating a rotating magnetic field; and
- the first position lies on an axis (105) through one of the M poles (103), notably a pole (103) which is assigned to a first phase of the multiphase control voltage ($U_a$, $U_b$, $U_c$).

9. The method (400) of any previous claims, wherein

- the rotor rotates around a rotational axis of the motor (100); and
- the first position and/or the second position are such that a magnet (102) of the rotor is aligned with the first sensor (201) and/or the second sensor (202) along an axis running in parallel to the rotational axis, when the magnet (102) passes by the first sensor (201) and/or the second sensor (202).

10. A method (500) for controlling a brushless DC motor (100); wherein the motor (100) comprises a rotor with magnets (102) forming K magnetic pole pairs and a stator with M poles (103) configured to generate a magnetic field; wherein the method (500) comprises,

- determining (501) a rotor position (220) of the rotor using the method (400) according to any of the previous claims; and
- determining (502) control voltages ($U_a$, $U_b$, $U_c$) for driving the M poles (103) of the stator of the motor (100) to generate the magnetic field, based on the rotor position (220).

11. The method (500) of claim 10, wherein the method (500) comprises

- determining a speed deviation (301) of a measured speed of a rotational speed of the rotor from a target speed for the rotational speed;
- determining a target current (303) for the stator current on a q-axis of a stationary reference frame based on the speed deviation (301), using a regulator (302);
- determining a current deviation (308) of a measured current (306) on the q-axis from the target current (303) on the q-axis;
- determining a target voltage ($U_q$) on the q-axis for controlling the motor (100), based on the current deviation (308) on the q-axis, using a regulator (312);
- determining a current deviation (311) of a measured current (310) on a d-axis of the stationary reference frame from a target current (309) on the d-axis;
- determining a target voltage ($U_d$) on the d-axis for controlling the motor (100), based on the current deviation (311) on the q-axis, using a regulator (313); and
- transforming the target voltages ($U_q$, $U_d$) from the stationary reference frame to an ABC reference frame for controlling three phases of the stator, using a Park transformation matrix; wherein the Park transformation matrix is dependent on the rotor position (220).

12. The method (500) of claim 11, wherein the measured speed is determined based on a rotor position signal indicative of the rotor position (220) as a function of time, notably by deriving the rotor position signal with respect to time.

**Fig. 1a**

**Fig. 1b**

Fig. 1c

Fig. 2a

Fig. 2b

Fig. 2c

Fig. 3

```
400 ┐
       ┌──────────────────────────────────────┐
       │  measuring a first sensor signal at a first  │── 401
       │      fixed position within a motor           │
       └──────────────────────────────────────┘
                         │
                         ▼
       ┌──────────────────────────────────────┐
       │  measuring a second sensor signal at a       │── 402
       │   second fixed position within the motor     │
       └──────────────────────────────────────┘
                         │
                         ▼
       ┌──────────────────────────────────────┐
       │  determining a rotor position signal based on │── 403
       │     the first and second sensor signals       │
       └──────────────────────────────────────┘
```

## Fig. 4

```
500 ┐
       ┌──────────────────────────────────────┐
       │  determining a rotor position of the rotor of │── 501
       │                the motor                      │
       └──────────────────────────────────────┘
                         │
                         ▼
       ┌──────────────────────────────────────┐
       │  determining control voltages for generating  │
       │   the magnetic field based on the rotor       │── 502
       │                 position                      │
       └──────────────────────────────────────┘
```

## Fig. 5

Europäisches
Patentamt
European
Patent Office
Office européen
des brevets

# EUROPEAN SEARCH REPORT

**Application Number**

EP 19 18 1377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/096380 A1 (TEXAS INSTRUMENTS INC [US]; TEXAS INSTRUMENTS JAPAN [JP]) 8 June 2017 (2017-06-08) | 1,3-8, 10-12 | INV. H02P6/16 H02K29/08 |
| Y | * paragraphs [0001], [0007], [0048] * <br> * paragraphs [0026] - [0032]; figure 1A * <br> ----- | 2,9 | |
| Y | US 2005/248306 A1 (CHEN XIAOJIANG [GB] ET AL) 10 November 2005 (2005-11-10) <br> * paragraph [0017] * <br> ----- | 2 | |
| Y | US 2010/090633 A1 (DELLER ROBERT W [US] ET AL) 15 April 2010 (2010-04-15) <br> * figure 2 * <br> ----- | 9 | |
| Y | EP 1 589 641 A2 (MINEBEA CO LTD [JP]) 26 October 2005 (2005-10-26) <br> * figure 4 * <br> ----- | 9 | |
| | | | **TECHNICAL FIELDS SEARCHED (IPC)** <br><br> H02P <br> H02K |

The present search report has been drawn up for all claims

| Place of search | Date of completion of the search | Examiner |
|---|---|---|
| Munich | 5 December 2019 | Kruip, Stephan |

EPO FORM 1503 03.82 (P04C01)

**EP 3 599 714 A1**

## ANNEX TO THE EUROPEAN SEARCH REPORT
## ON EUROPEAN PATENT APPLICATION NO.

EP 19 18 1377

05-12-2019

| Patent document cited in search report | | Publication date | Patent family member(s) | | Publication date |
|---|---|---|---|---|---|
| WO 2017096380 | A1 | 08-06-2017 | CN 108370229 | A | 03-08-2018 |
| | | | EP 3384584 | A1 | 10-10-2018 |
| | | | JP 2018537942 | A | 20-12-2018 |
| | | | US 2017163182 | A1 | 08-06-2017 |
| | | | US 2017272011 | A1 | 21-09-2017 |
| | | | WO 2017096380 | A1 | 08-06-2017 |
| US 2005248306 | A1 | 10-11-2005 | GB 2413905 | A | 09-11-2005 |
| | | | JP 2005323490 | A | 17-11-2005 |
| | | | US 2005248306 | A1 | 10-11-2005 |
| US 2010090633 | A1 | 15-04-2010 | NONE | | |
| EP 1589641 | A2 | 26-10-2005 | DE 102004019636 | A1 | 10-11-2005 |
| | | | EP 1589641 | A2 | 26-10-2005 |